# EUROPÄISCHE PATENTSCHRIFT

(11) **EP 0 851 835 B1**
(45) Veröffentlichungstag und Bekanntmachung des Hinweises auf die Patenterteilung: **26.01.2000**
(21) Anmeldenummer: 96928309.2
(22) Anmeldetag: 10.09.1996
(51) Int. Cl.: C01B 7/07

(54) **VERFAHREN ZUR AUFBEREITUNG EINER MIT FLUOR VERUNREINIGTEN ABFALLSALZSÄURE**
METHOD OF PROCESSING FLUORINE-CONTAMINATED HYDROCHLORIC ACID ARISING FROM WASTE TREATMENT
PROCEDE DE TRAITEMENT D'UN ACIDE CHLORHYDRIQUE RESIDUAIRE CONTAMINE PAR DU FLUOR

(30) Priorität: 18.09.1995 EP 95810578
(43) Veröffentlichungstag der Anmeldung: 08.07.1998
(73) Patentinhaber: CT Umwelttechnik AG, CH-8404 Winterthur (CH)
(72) Erfinder: AINSCOW, Stuart, CH-8400 Winterthur (CH); WEILENMANN, Max, CH-8037 Zürich (CH); SITTKUS, Rudolf, D-88326 Aulendorf (DE)
(74) Vertreter: Heubeck, Bernhard
(86) Internationale Anmeldenummer: CH9600309
(87) Internationale Veröffentlichungsnummer: WO9711027

(56) Entgegenhaltungen:
- EP-A- 0 504 622
- EP-A- 0 506 050
- DE-A- 4 240 078
- US-A- 4 714 604
- PATENT ABSTRACTS OF JAPAN vol. 9, no. 145 (C-287) [1868] , 20.Juni 1985 & JP,A,60 027604 (ASAHI GLASS K.K.)

## Beschreibung

Die Erfindung betrifft ein Verfahren zur Aufbereitung einer mit Fluor verunreinigten Abfallsalzsäure gemäss Oberbegriff von Anspruch 1 sowie Anwendungen des Verfahrens. Abfallsalzsäuren entstehen insbesondere in Rauchgaswäschern von Müll- oder Sondermüllverbrennungsanlagen. Unter der Aufbereitung einer solchen Rohsäure wird die Herstellung einer höher konzentrierten Salzsäure, die technisch verwertbar ist, verstanden. Das verunreinigende Fluor liegt in Form von fluorhaltigen Verbindungen vor.

Aus der EP-A 0 504 622 ist ein Verfahren zur Herstellung einer höher konzentrierten Salzsäure aus einer Ausgangssäure mit einer unterhalb der azeotropen Konzentration liegenden Chlorwasserstoff-Konzentration bekannt. Bei diesem Verfahren wird in einer ersten Stufe Wasser aus der Ausgangssäure ausgetrieben. In einer zweiten Stufe wird mit einem Kreislauf, in dem ein Schleppmittel, nämlich eine auf Siedetemperatur erwärmte wässrige CaCl₂-Lösung, zirkuliert, Wasser sowie HCl ausgetrieben und dieser Abdampf der ersten Stufe als Heizdampf zugeführt. Die aus der ersten Stufe abgezogene aufkonzentrierte Salzsäure wird aufkonzentriertem Schleppmittel aus der zweiten Stufe zugemischt. Aus diesem Gemisch wird in einer dritten Stufe HCl abgetrennt und in einem Absorber mit Wasser zu konzentrierter Salzsäure verflüssigt. Von der dritten Stufe führt eine Rückleitung zur zweiten Stufe, wodurch diese beiden Stufen über einen Schleppmittelkreislauf miteinander verbunden sind.

Enthält die Ausgangssäure Fluor, insbesondere in Form von Fluorwasserstoff, so wird in der dritten Stufe des bekannten Verfahrens ein grosser Teil des Fluors als CaF₂ abgeschieden. Als Produkt entsteht ein Gemisch, das neben HCl noch einen Restanteil HF enthält. Um eine technisch verwertbare Salzsäure gewinnen zu können, muss je nach Anforderung aus diesem Gemisch HF entfernt werden. Ein Verfahren, mit dem sich diese Entfernung vornehmen lässt, ist aus der DE-A 1 567 494 bekannt. Gemäss diesem Verfahren wird eine Wäsche vorzugsweise mit Salzsäure in einer Glockenbodenkolonne durchgeführt.

Die HF-Entfernung mittels des bekannten Verfahrens ist einerseits aufwendig, und andererseits ist in vielen Fällen eine Herstellung einer technisch verwertbaren Salzsäure mit einem niedrigen Restgehalt an Fluorid (F⁻) nicht durchführbar, wenn der Restgehalt wesentlich kleiner als 100 ppm, insbesondere nicht grösser als 10 ppm sein soll. Es ist daher die Aufgabe der vorliegenden Erfindung, ein anderes Verfahren zur Herstellung von konzentrierter Salzsäure zu schaffen, wobei der Fluoridgehalt der Produktsäure einen Wert annehmen soll, der tiefer als bei der Anwendung des bekannten Verfahrens ist.

Ein verstecktes Problem bei den bekannten Verfahren hat darin bestanden, dass Fluor nicht nur in Form von Fluorwasserstoff, HF, sondern auch als Siliciumtetrafluorid (SiF₄) in der Dampfphase vorliegen kann. Diese flüchtige Fluorverbindung erscheint auch im Produkt der Rektifikation. Anders als HF lässt sich SiF₄ bei einer anschliessenden Wäsche, wie sie oben erwähnt worden ist, nicht entfernen, so dass schliesslich im Absorber eine Salzsäure entsteht, deren Fluorgehalt zu gross ist. Im Absorber sammeln sich Restgase an, die SiF₄ enthalten. Die Entfernung des SiF₄ durch Entfernung der Restgase genügt nicht, um eine Produktsäure erhalten zu können, deren Fluorverunreinigung ausreichend klein ist. Das Ziel, eine derartige Produktsäure zu gewinnen, lässt sich durch die Massnahme erreichen, die im kennzeichnenden Teil des Anspruchs 1 angegeben ist.

Mit dem Verfahren zur Aufbereitung einer mit Fluor verunreinigten Abfallsalzsäure oder Rohsäure wird eine dehydrierende Rektifikation durchgeführt, und zwar unter Verwendung eines Schleppmittelkreislaufs, in dem eine wässrige Lösung von wasser- und fluoridbindenden Stoffen zirkuliert. Im Schleppmittel ist ein Ausscheidemittel enthalten, durch das sowohl Fluor als auch Silicium als Feststoffe in einer Ausschlämmung gebunden werden.

HF und SiF₄ reagieren in der wässrigen Lösung des Schleppmittels reversibel zu Hexafluorokieselsäure, H₂SiF₆ (2 HF + SiF₄ ↔ H₂SiF₆). H₂SiF₆ liegt nur als gelöster Stoff im Schleppmittel vor und ist somit nicht in der Dampfphase enthalten. Enthält das Schleppmittel zusätzlich ein Ausscheidemittel, insbesondere Aluminium, wie dies die Erfindung vorsieht, so reagiert dieses mit H₂SiF₆. Es fällt dabei Silicium als Kieselsäure (SiO₂) aus, und Fluor wird - für das besondere Beispiel - in Form von Aluminiumtrifluorid (AlF₃) gebunden.

Die abhängigen Ansprüche 2 bis 10 beziehen sich auf Weiterbildungen und vorteilhafte Ausführungsformen des erfindungsgemässen Verfahrens. Die Ansprüche 11 und 12 betreffen Anwendungen des Verfahrens.

Nachfolgend wird die Erfindung anhand der Zeichnungen erläutert. Es zeigen:
- Fig. 1: ein Schema einer Anlage bzw. eines Verfahrens mit einem Schleppmittelkreislauf,
- Fig. 2: eine Ergänzung zur Anlage der Fig.1, die auch ein Anlageteil des erfindungsgemässen Verfahrens darstellt, und
- Fig. 3: ein Blockschema des erfindungsgemässen Verfahrens.

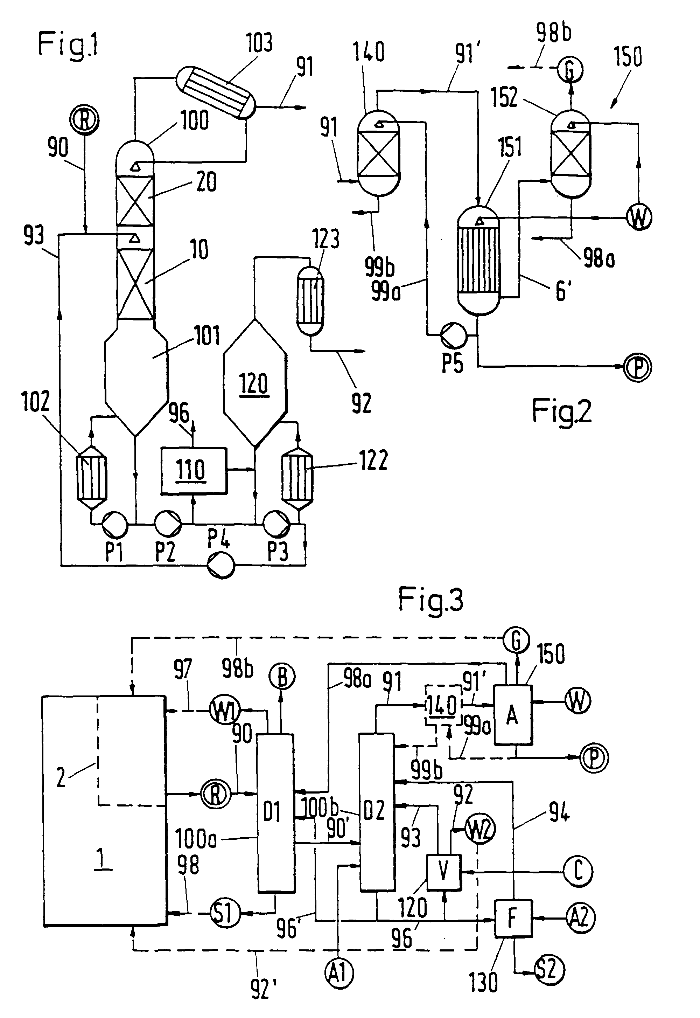

Ein Verfahren, das weitgehend dem Verfahren der genannten EP-A 0 504 622 gleicht, wird in einer Anlage gemäss der Fig.1 durchgeführt. Diese Anlage besteht aus folgenden Komponenten: Rektifikationskolonne 100 mit Abtriebsteil 10, Verstärkerteil 20, Kopfkondensator 103 und Sumpf/Verdampfer 101, Umwälzpumpe P1 sowie Heizkammer 102; Schleppmittelkreislauf mit Pumpen P2, P3 sowie P4, Rückführleitung 93, Abschlämmsystem 110 und Eindampfstufe 120, der eine Heizkammer 122 und ein Kondensator 123 zugeordnet sind.

Beim Bezugszeichen 90 wird die Rohsäure R aus einem Rauchgaswäscher in die Anlage eingespeist; bei 91 wird HCl-Gas abgezogen und einem Absorber zugeführt (vgl. Fig.2); bei 92 wird ein Brüdenkondensat, das eine kleine HCl-Konzentration aufweist, abgezogen und wieder in den Rauchgaswäscher zurückgeführt; und bei 96 werden abgeschlämmte Feststoffe aus der Anlage ausgeschleust.

In Fig.2 ist eine Teilanlage 140, 150 dargestellt, in der das Produktgas 91 weiterbehandelt wird. Diese Teilanlage umfasst eine Waschkolonne 140, einen Absorber 151 und einen Nachwäscher 152. Aus gewaschenem Produktgas 91' und unter Zufuhr von entsalztem Wasser W entsteht im Absorber Produktsäure P. Mit einer Pumpe P5 wird ein Teil 99a der gewonnenen konzentrierten Salzsäure in den Wäscher 140 rückgeführt. Die aus dem Wäscher 140 austretende Waschflüssigkeit 99b wird in die Rektifikationskolonne 100 geleitet. Restgase G' aus dem Absorber 151, die SiF₄ enthalten, erscheinen nach der Wäsche mit Wasser W als Restgase G. Im Wasser erfolgt eine hydrolytische Zersetzung von SiF₄ (unter Ausfällung von hydratisierter Kieselsäure und Bildung von Hexafluorokieselsäure (H₂SiF₆)). Das gebrauchte Waschwasser 98a wird beispielsweise in den Sumpf 101 der Kolonne 100 zurückgeführt und das Restgas G zum Rauchgaswäscher, aus dem die Rohsäure R entnommen wird.

Das Blockschema der Fig.3 stellt eine vorteilhafte Ausführungsform des erfindungsgemässen Verfahrens dar. Die Blöcke haben folgende Bedeutung: Block 1 ist eine Müllverbrennungsanlage mit einem Rauchgaswäscher 2; D1 ist eine erste Dehydratationskolonne 100a, deren Aufbau jenem der Kolonne 100 (Fig.1) gleicht; D2 ist eine zweite Dehydratationskolonne 100b, deren Aufbau ebenfalls jenem der Kolonne 100 gleicht; V ist eine Eindampfstufe 120 für das Schleppmittel (vgl. Fig.1); F ist eine Behandlungs- und Filterstation 130; die Blöcke 140 und A entsprechen der Teilanlage 140, 150 der Fig.2.

Die Rohsäure R aus dem Rauchgaswäscher 2, die 7 - 15 Gewichtsprozent HCl, 300 - 3000 ppm Fluor und 100 - 1000 ppm Silicium enthält, wird über die Leitung 90 in die erste Dehydratationskolonne 100a eingespeist. Es wird Wasser W1 bei unterazeotropen Bedingungen ausgetrieben und über die Verbindung 97 in den Rauchgaswäscher 2 zurückgeführt. Neben Wl erscheinen auch weitere flüchtige Stoffe B (Brom, Jod, SiF₄) im Kopfprodukt. Unter Zugabe von Abschlämmung aus der zweiten Dehydratationskolonne 100b über die Verbindung 96' lässt sich ein Gemisch S1 diverser Stoffe abscheiden, nämlich Schwermetallsalze, CaCl₂, CaF₂, CaSO₄, NaCl, AlF₃, Na₃[AlF₆], NH₄Cl, NaJO₃, NaBr und weitere Stoffe. Dieses Gemische S1 wird über die Leitung 98 in einen Verdampfungskühler (Quench) der Anlage 1 zurückgeführt.

Aus der Dampfphase des Sumpfes der Kolonne 100a wird ein zumindest annäherend azeotropsiedendes Gasgemisch, das rund 18 - 20 % HCl und neben anderen Stoffen auch HF sowie SiF₄ enthält, über die Verbindung 90' in die zweite Dehydratationskolonne 100b geleitet. Dort wird bei überazeotropen Bedingungen unter Verwendung eines CaCl₂ führenden Schleppmittelkreislaufs 93 das HCl-Gas 91 erzeugt. Bevor dieses Gas 91 zum Absorber 151 des Blocks A (vgl. Fig.2) geleitet wird, kann in der optionalen Waschkolonne 140 verunreinigendes HF entfernt werden. Ohne die erfindungsgemäss vorgesehene Massnahme zur Ausscheidung von Fluor und Silicium in der Kolonne 100b ergibt sich eine Produktsäure P, die einen Fluoridgehalt von mindestens 100 ppm aufweist.

In der Eindampfstufe 120 (Block V) wird ein Brüdenkondensat W2 abgezogen. Dieses leicht salzsäurehaltige Kondensat W2 kann in den Rauchgaswäscher 2 zurückgeführt werden (Verbindung 92'). Schleppmittelverluste werden aus einem Reservoir C ergänzt, sofern diese nicht durch die Rückführung des Filtrats 94 ausreichend gedeckt sind.

In den Schleppmittelkreislauf 93 werden Additive A1 zugeführt. In diesen Additiven A1 ist erfindungsgemäss ein Ausscheidemittel enthalten, das Fluor und Silicium, die in H₂SiF₆ gebunden sind, zur Ausfällung bringt. Als Ausscheidemittel können Al³⁺-Ionen verwendet werden. Die Menge an Ausscheidemittel muss auf den Zustrom an SiF₄ in die Kolonne 100b abgestimmt sein, so dass diese flüchtige Siliciumverbindung weitgehend im Schleppmittelkreislauf 93 eliminierbar ist.

Die im Sumpf der Kolonne 100b anfallende Ausschlämmung, die CaF₂, SiO₂ und AlF₃ als Feststoffe sowie unverbrauchte Anteile der Additive A1 enthält, wird zumindest teilweise über die Verbindung 96' in die Kolonne 100a rückgeführt. Ein weiterer Teil der Ausschlämmung kann der Behandlungs- und Filterstation 130 zugeführt werden. Es wird dort vorzugsweise ein Filterhilfsmittel A2 zugemischt, beispielsweise Kaolin (Al₂Si₂O₇·2H₂O) oder ein anderer aluminiumhaltiger Stoff, beispielsweise Filterstaub, der gleich wie Kaolin Al³⁺-Ionen an die umgebende wässrige Phase abgibt. Die freigesetzten Al³⁺-Ionen gelangen mit einem klaren Filtrat 94, das bei der Filtration von Feststoffen S2 abgetrennt wird, wieder zurück in die Kolonne 100b, wo sie als Ausscheidemittel wirken. Falls durch das Filterhilfsmittel eine zu geringe Menge an Ausscheidemittel in das Schleppmittel abgegeben wird, kann eine Ergänzung beispielsweise durch Zugabe von AlCl₃ vorgenommen werden. Mit Vorteil wird Al³⁺ in überstöchiometrischen Mengen in den Rücklauf 94 zur Überazeotropkolonne 100b eingebracht.

Dank der Wirkung der Ausscheidemittel ist es möglich, den Fluoridgehalt der Produktsäure P auf tiefe Werte - insbesondere unter 10 ppm - herabzusetzen.

Das erfindungsgemässe Verfahren lässt sich auch in einer Anlage gemäss Fig.1 mit nur einer Dehydratationskolonne durchführen.

## Patentansprüche

1. Verfahren zur Aufbereitung einer mit Fluor verunreinigten Abfallsalzsäure oder Rohsäure, bei welchem Verfahren unter Verwendung eines Schleppmittelkreislaufs, in dem eine wässrige Lösung von wasser- und fluoridbindenden Stoffen zirkuliert, eine dehydrierende Rektifikation durchgeführt wird, dadurch gekennzeichnet, dass im Schleppmittel ein Ausscheidemittel enthalten ist, durch das sowohl Fluor als auch Silicium als Feststoffe in einer Ausschlämmung gebunden werden.

2. Verfahren nach Anspruch 1, dadurch gekennzeichnet, dass die Feststoffe der Ausschlämmung durch Filtration und unter Verwendung eines Filterhilfsmittels aus dem Schleppmittel entfernt werden und dass ein Filtrat in den Schleppmittelkreislauf zurückgeführt wird.

3. Verfahren nach Anspruch 2, dadurch gekennzeichnet, dass mindestens ein Teil des Ausscheidemittels durch Herauslösen aus dem Filterhilfsmittel in das Filtrat eingebracht wird.

4. Verfahren nach einem der Ansprüche 1 bis 3, dadurch gekennzeichnet, dass die wasserbindenden Stoffe des Schleppmittels auch fluoridbindend sind, und dass insbesondere CaCl₂ als ein derartiger Stoff verwendet wird.

5. Verfahren nach einem der Ansprüche 1 bis 4, dadurch gekennzeichnet, dass das Ausscheidemittel Al³⁺-Ionen enthält, welche im Schleppmittel mit H₂SiF₆ zu AlF₃ und SiO₂ reagieren.

6. Verfahren nach einem der Ansprüche 2 bis 5, dadurch gekennzeichnet, dass das Filterhilfsmittel Kaolin ist, aus dem Al³⁺ in das Filtrat abgegeben wird.

7. Verfahren nach einem der Ansprüche 1 bis 6, dadurch gekennzeichnet, dass Chlorwasserstoff, der bei der Rektifikation gewonnen wird, in einem Absorber mit Wasser zu konzentrierter Salzsäure verflüssigt wird, und dass Restgase, die SiF₄ enthalten, aus dem Absorber entfernt und in einer Nachwäsche weiter behandelt werden.

8. Verfahren nach Anspruch 7, dadurch gekennzeichnet, dass der Chlorwasserstoff mit konzentrierter Salzsäure gewaschen wird, um verunreinigende Stoffe wie beispielsweise Fluorwasserstoff zumindest teilweise zu entfernen.

9. Verfahren nach einem der Ansprüche 1 bis 8, dadurch gekennzeichnet, dass die Rohsäure in einer ersten Dehydrationsstufe bei unterazeotropen Bedingungen behandelt wird und dass ein zumindest angenähert azeotropes Gasgemisch in einer zweiten Dehydrationsstufe bei überazeotropen Bedingungen unter Verwendung des Schleppmittels weiter behandelt wird.

10. Verfahren nach einem der Ansprüche 1 bis 9, dadurch gekennzeichnet, dass Al³⁺ in den Rücklauf zur der zweiten Dehydrationsstufe in überstöchiometrischen Mengen eingebracht wird.

11. Anwendung des Verfahrens gemäss einem der Ansprüche 1 bis 10 zum Aufbereiten von Rohsäure, die in einer Müll- oder Sondermüllverbrennungsanlage aus der Rauchgaswäsche gewonnenen worden ist.

12. Anwendung nach Anspruch 11 zum Erzeugen einer konzentrierten Salzsäure, deren Gehalt an Fluorid F⁻ wesentlich kleiner als 100 ppm, insbesondere kleiner als 10 ppm ist.

## Revendications

1. Procédé pour le traitement d'un acide chlorhydrique résiduaire contaminé par du fluor, ou acide brut, procédé dans lequel en utilisant un circuit d'un agent d'entraînement, dans lequel circule une solution aqueuse matières liant l'eau et les fluorures, est accomplie une rectification déshydratante, caractérisé en ce que dans l'agent d'entraînement est contenu un agent de séparation par lequel aussi bien le fluor qu'également le silicium en tant que matières solides se trouvent liés dans une purge.

2. Procédé selon la revendication 1, caractérisé en ce que les matières solides de la purge sont éliminées, par filtration et en utilisant un auxiliaire de filtration, de l'agent d'entraînement et en ce qu'un filtrat est ramené dans le circuit de l'agent d'entraînement.

3. Procédé selon la revendication 2, caractérisé en ce qu'au moins une partie de l'agent de séparation est introduite par dissolution de l'auxiliaire de filtration dans le filtrat.

4. Procédé selon l'une des revendications 1 à 3, caractérisé en ce que les matières liant l'eau de l'agent d'entraînement lient également les fluorures et en ce qu'en particulier CaCl₂ est utilisé en tant qu'une telle matière.

5. Procédé selon l'une des revendications 1 à 4, caractérisé en ce que l'agent de séparation contient des ions Al³⁺ qui réagissent, dans l'agent d'entraînement, avec H₂SiF₆ en AlF₃ et SiO₂.

6. Procédé selon l'une des revendications 2 à 5, caractérisé en ce que l'auxiliaire de filtration est du kaolin, duquel Al³⁺ est donné au filtrat.

7. Procédé selon l'une des revendications 1 à 6, caractérisé en ce que du chlorure d'hydrogène, qui est obtenu lors de la rectification, est liquéfié dans un absorbeur avec de l'eau en acide chlorhydrique concentré et en ce que les gaz résiduels, qui contiennent SiF₄, sont enlevés de l'absorbeur et sont plus amplement traités dans un post lavage.

8. Procédé selon la revendication 7, caractérisé en ce que le chlorure d'hydrogène est lavé avec de l'acide chlorhydrique concentré pour au moins partiellement éliminer les matières contaminantes comme par exemple le fluorure d'hydrogène.

9. Procédé selon l'une des revendications 1 à 8, caractérisé en ce que l'acide brut est traité dans un premier étage de déshydratation, en conditions sous azéotropiques et en ce qu'un mélange gazeux au moins presque azéotropique est traité dans un second étage de déshydratation en conditions super azéotropique en utilisant l'agent d'entraînement.

10. Procédé selon l'une des revendications 1 à 9, caractérisé en ce que Al³⁺ est introduit dans le circuit de retour vers la seconde colonne de déshydratation en quantités au-delà de la stoechiométrie.

11. Utilisation du procédé selon l'une des revendications 1 à 10 pour le traitement d'un acide brut qui a été obtenu dans une installation de combustion des ordures ou autres déchets en provenance du lavage des gaz de fumée.

12. Utilisation selon la revendication 11 pour la production d'un acide chlorhydrique concentré dont la teneur en fluorure F⁻ est considérablement plus petite que 100 ppm, en particulier plus petite que 10 ppm.

## Claims

1. Method for processing a waste hydrochloric acid or raw acid contaminated with fluorine, in which method a dehydrating rectification is performed using a carrier circuit in which an aqueous solution of water and fluoride binding substances is circulating,
characterised in that a precipitation agent is contained in the carrier, by means of which both fluorine and silicon are bound as solid substances in a slurry.

2. Method in accordance with claim 1 characterised in that the solid substances of the slurry are removed from the carrier by filtration and with the use of an auxiliary filter means; and in that a filtrate is returned to the carrier circuit.

3. Process in accordance with claim 2 characterised in that at least one part of the precipitation agent is introduced into the filtrate by being dissolved out of the auxiliary filtration agent.

4. Process in accordance with one of the claims 1 to 3 characterised in that the water binding substances of the carrier are also fluoride binding; and in that CaCl₂ in particular is used as such a substance.

5. Process in accordance with one of the claims 1 to 4 characterised in that the precipitation agent contains Al³⁺ ions which react in the carrier with H₂SiF₆ to produce AlF₃ and SiO₂.

6. Process in accordance with one of the claims 2 to 5 characterised in that the auxiliary filtration agent is kaolin from which Al³⁺ is donated into the filtrate.

7. Process in accordance with one of the claims 1 to 6 characterised in that hydrogen chloride, which is won in the rectification, is liquefied in an absorber to concentrated hydrochloric acid; and in that residual gases containing SiF₄ are removed from the absorber and are further treated in a subsequent washing process.

8. Process in accordance with claim 7 characterised in that the hydrogen chloride is washed with concentrated hydrochloric acid in order to at least partially remove contaminating substances such as hydrogen fluoride.

9. Process in accordance with one of the claims 1 to 8 characterised in that the raw acid is treated in a first dehydration step at subazeotropic conditions; and in that an at least approximately azeotropic gas mixture is further treated in a second dehydration step at superazeotropic conditions using the carrier.

10. Process in accordance with one of the claims 1 to 9 characterised in that Al³⁺ is introduced into the return flow to the second dehydration step in above stoichiometric amounts.

11. Use of the process in accordance with one of the claims 1 to 10 for processing raw acid which is won from the exhaust gas washing in a refuse or special refuse incineration installation.

12. Use of the process in accordance with claim 11 for producing a concentrated hydrochloric acid, the fluoride content F⁻ of which is considerably less than 100 ppm, in particular less than 10 ppm.
